# EUROPÄISCHE PATENTSCHRIFT

(11) **EP 0 220 694 B1**
(45) Veröffentlichungstag und Bekanntmachung des Hinweises auf die Patenterteilung: **27.09.1995**
(21) Anmeldenummer: 86114786.6
(22) Anmeldetag: 24.10.1986
(51) Int. Cl.: G01N 27/30

(54) **Anordnung zur Stabilisierung einer Gas-Bezugselektrode**
Apparatus for stabilizing a gas reference electrode
Appareil pour stabiliser une électrode de référence à gaz

(30) Priorität: 24.10.1985 DE 3537919
(43) Veröffentlichungstag der Anmeldung: 06.05.1987
(73) Patentinhaber: Kessler, Manfred, Prof. Dr. med., D-91056 Erlangen (DE)
(72) Erfinder: Kessler, Manfred, Prof. Dr., D-8520 Erlangen (DE); Höper, Jens, Dr., D-8520 Erlangen (DE)
(74) Vertreter: LOUIS, PÖHLAU, LOHRENTZ & SEGETH

(56) Entgegenhaltungen:
- EP-A- 0 141 178
- DE-A- 2 730 143
- DE-A- 3 225 871
- GB-A- 2 078 962
- GB-A- 2 148 511
- US-A- 3 911 901

## Beschreibung

Die Erfindung betrifft eine Anordnung zur Stabilisierung einer Gas-Bezugselektrode bei der elektrochemischen Messung von Aktivitäten, mit einer Bezugselektrode aus Edelmetall und einer die Bezugselektrode teilweise bedeckenden lipophilen Membran, die zwischen der Bezugselektrode und einem, in einem Elektrolytraum enthaltenen, Elektrolyten angeordnet ist.

Eine entsprechende Vorrichtung ist aus der EP-A 0 141 178 bekannt. Unter "Aktivitäten" sollen hier ggfs. auch die den Gas-Partialdrücken entsprechenden Fugazitäten verstanden werden. "Teilweise bedeckend" bezieht sich auf die Gesamt-Bezugselektrode, die im übrigen, d.h. in anderen Teilbereichen, von einer Isolierschicht bedeckt sein kann. Die Membran dient jedenfalls dazu, Elektrode und Elektrolyt so zu trennen, daß der Elektrolyt an keiner Stelle direkt an die Elektrode angrenzt. Der elektrische Widerstand dieser durch eine lipophile Membran bedeckten Metallelektrode liegt in einer Größenordnung von mindestens 10⁹Ω.

Derartige Vorrichtungen sind als Bezugselektroden besonders geeignet, da sie durch die Schutzmembran, für die wegen näherer Einzelheiten ausdrücklich auf die obige EP-A 0 141 178 hingewiesen wird, schon an sich eine im Vergleich zu früheren Bezugselektroden hohe Stabilität aufweisen.

Gas-Bezugselektroden sind bekannt. Sie werden über einen Elektrolyten mit einer Meßelektrode verbunden, an der die Konzentration (und damit die Aktivität) eines zu messenden Stoffes veränderlich ist. Die sich nach dem Nernstschen Gesetz ergebende Spannungsänderung der Meß-Elektrode wird in bekannter Weise gemessen und als Maß für die Aktivität (und damit die Konzentration) des zu messenden Stoffes gewonnen. Hierzu werden die Anschlüsse der Meß- und der Bezugselektrode an die jeweiligen Eingänge eines Meßinstrumentes gelegt. Zu "Aktivitäten" wird auf die eingangs gemachten Bemerkungen verwiesen.

Eine wichtige Voraussetzung für die Genauigkeit einer solchen Messung ist eine hinreichende Stabilität und damit Konstanz des Potentialwertes E₀ der Nernstgleichung, und damit insbesondere der Bezugselektrode. Dieser Potentialwert ist aber wesentlich von den Bedingungen, unter denen sich die Gas-Bezugselektrode befindet, wie dem Partialdruck des zugehörigen Gases und der Temperatur, abhängig.

Die Bezugselektrode zeigt ferner eine gewisse Drift, die bei den hier bevorzugt ins Auge gefaßten Anwendungen, z.B. Implantation der Gesamt-Meßanordnung im menschlichen Körper, nicht durch Nacheichung korrigiert werden kann. Diese Drift ist auch unabhängig von der Konstanthaltung der sonstigen Bedingungen für die Bezugselektrode. Die Drift einer typischen Wasserstoff-Bezugselektrode liegt z.B. in der Größenordnung von 1 mV/5 Tagen.

Der Erfindung liegt daher die Aufgabe zugrunde, eine Anordnung zur Stabilisierung von Gasbezugselektroden zu schaffen, die auf einfache Weise eine sichere und gegenüber bekannten Anordnungen gesteigerte Stabilität des Bezugspotentials gewährleistet und für physiologische Zwecke hinreichend miniaturisier. Diese Aufgabe wird bei einer Anordnung der eingangs beschriebenen Art erfindungsgemäß dadurch gelöst, daß eine Gas-Quellenelektrode für das Gas für die Gas-Bezugselektrode vorgesehen ist, mit einer lipophilen, für das Gas durchlässigen, insbesondere einen Protonencarrier aufweisenden Membran zwischen der Quellenelektrode und dem Elektrolytraum.

Die GB 2 078 962 A zeigt zwar eine Anordnung zur Stabilisierung einer Wasserstoffbezugselektrode, bei der auch eine Wasserstoffquellenelektrode vorhanden ist. Diese Quellenelektrode weist jedoch keine Membran auf. Das Problem der Drift des Potentials der Bezugselektrode wird gemäß dieser Druckschrift durch Konstanthalten des Verhältnisses der Widerstände zweier Bezugselektrodenbereiche durch Steuerung der Wasserstoffzufuhr durch die Quellenelektrode zu beherrschen gesucht.

Mit der erfindungsgemäßen Anordnung ist es möglich, den Partialdruck des jeweiligen Gases für die Bezugselektrode auf einem gleichmäßigeren Wert zu halten und somit die Meßgenauigkeit der Gesamtanordnung, in der die Bezugselektrode verwendet wird, zu erhöhen.

Durch die erfindungsgemäße Ausbildung der Quellenelektrode mit der lipophilen Membran zwischen der Quellenelektrode und dem Elektrolytraum wird erreicht, daß die Quellenelektrode, obschon im Elektrolytraum angeordnet, möglichst wenig von den sonstigen Stoffen und Vorgängen im Elektrolyten beinträchtigt wird. Hinsichtlich des Wortes "zwischen" wird auf die obige Bemerkung zur Trennung von Elektrode und Elektrolyt verwiesen.

Die Quellenelektrode weist vorzugsweise ein Edelmetall auf, an der das für die Bezugselektrode benötigte Gas (aus dem Elektrolyten) freigesetzt wird. Dadurch daß die Quellenelektrode ebenfalls im Elektrolytraum der Bezugselektrode angeordnet ist, läßt sich eine wesentliche Verkleinerung der Gesamtanordnung erreichen. Die direkte Zuführung des jeweiligen Gases benötigt doch immer erheblichen Raum, der insbesondere bei physiologischen Anwendungen oft nicht zur Verfügung steht. Durch die Erzeugung auf elektrolytischem Wege im Elektrolytraum läßt sich eine entsprechende Miniaturisierung erreichen.

Bevorzugt ist im gleichen Elektrolytraum, dem der Bezugselektrode, eine Gegenelektrode für die Quellen-Elektrode vorgesehen. Die Erzeugung des Gases findet dann in einem eigenen elektrolytischen Kreis aus Quellen-Elektrode und Gegenelektrode statt.

Besonders bevorzugt ist eine Konstantstromquelle zwischen Quellen-Elektrode und Gegenelektrode angeordnet, die die Gasquelle betreibt. Dadurch kann mit einfachen elektronischen Mitteln eine konstante Gaserzeugung und damit eine hohe Meßgenauigkeit gewährleistet werden.

Gemäß einer besonders bevorzugten Weiterbildung weist eine Anordnung bei der elektrochemischen Messung von Aktivitäten mit einer Bezugselektrode aus Edelmetall und einer die Bezugselektrode teiweise bedeckenden lipophilen Membran, insbesondere gemäß obiger Darstellung, eine weitere Elektrode von der Polarität der Meßelektrode - d. h. einer Polarität entgegengesetzt der der Bezugselektrode - , auf, der die Gegenelektrode als Quellenelektrode zugeordnet ist, wobei der Anschluß der Bezugselektrode (auch) an den einen Eingang eines (weiteren) Differenzverstärkers und der Anschluß der weiteren Elektrode an den anderen Eingang dieses weiteren Differenzverstärkers angelegt ist, dessen Ausgang überwacht wird.

Es hat sich herausgestellt, daß auch bei an sich zuverlässig arbeitenden Bezugselektroden häufig im Laufe der Zeit eine gewisse Drift auftritt, die dann das Ergebnis der Gesamtanordnung aus Meßelektrode und Bezugselektrode verfälscht. Erfindungsgemäß wird daher eine weitere Elektrode von der Polarität der Meßelektrode eingesetzt. Diese weitere Elektrode bildet wiederum mit der Bezugselektrode ein elektrochemisches Meßsystem, wenn die Polaritäten der jeweiligen Elektroden einander entgegengesetzt sind. Abweichungen dieses Meßsystems geben einen Hinweis auf eine Störung im Bereich der Bezugselektrode. Der Meßwert des Systems aus Meßelektrode und Bezugselektrode kann dann entweder verworfen oder anhand des Meßergebnisses des Systems Bezugselektrode/weitere Elektrode korrigiert werden. Dabei ist zweckmäßig die Gegenelektrode zur Quellenelektrode für die Bezugselektrode ihrerseits nun wieder der weiteren Elektrode zugeordnet und versorgt sie mit dem entsprechenden anderen Gas aus der Elektrolyse, so daß zusätzlich der Beitrag der weiteren Elektrode zum Ergebnis U_{ref} des Systems Bezugselektrode/weitere Elektrode besonders stabil gehalten werden kann.

Eventuelle Schwankungen der Gas erzeugung wirken durch die Verbindung von Quellenelektrode und Gegenelektrode (die ihrerseits wieder Quellen-Elektrode für die weitere Elektrode ist) gleichsinnig, so daß der Einfluß solcher Fehler ebenfalls erkennbar und damit ggf. korrigierbar wird.

So wie der Anschluß der Bezugselektrode an den einen Eingang eines Differenzverstärkers angelegt ist, an dessen anderer Eingang der Anschluß der Meßelektrode angelegt ist, wird nunmehr der Ausgang bzw. Anschluß der Bezugselektrode auch an den einen Eingang eines weiteren Differenzverstärkers angelegt, an dessen, des weiteren Differenzverstärkers, anderen Eingang der Ausgang bzw. Anschluß der weiteren Elektrode angelegt ist. Der Ausgang dieses weiteren Differenzverstärkers; U_{ref}, gibt somit ein Maß für die relativen Veränderungen zwischen Bezugselektrode und weiterer Elektrode.

In Verbindung mit dem Merkmal, daß der Strom der beiden Quellenelektroden (Quellenelektrode für die Bezugselektrode und Gegenelektrode als Quellenelektrode für die weitere Elektrode) durch eine Konstantstromquelle besonders konstant gehalten wird, läßt sich eine Abweichung dann mit großer Sicherheit auf einen Fehler des Elektrodensystems, insbesondere der Bezugselektrode, selber zurückführen, da nicht anzunehmen ist, daß sich derartige Fehler bei der Bezugselektrode und der weiteren Elektrode gleichsinnig entwickeln.

Besonders bevorzugt wird der Strom zwischen Quellen-Elektrode und Gegenelektrode durch eine Strommeßeinrichtung überwacht. Auch dieser Wert, der sich durch die Überwachung ergibt, kann dann in geeigneter Weise zur Korrektur des eigentlichen Meßwertes, der durch Vergleich der Meßelektrode mit der Bezugselektrode gewonnen wird, verwendet werden.

Die Erfindung betrifft auch eine Gasquelle, insbesondere mit den oben genannten Merkmalen. Eine solche Gasquelle ist einerseits zweckmäßig elektrolytisch und damit im Elektrolytraum angeordnet, sie soll aber ihrerseits möglichst wenig von den sonstigen Stoffen und Vorgängen im Elektrolyten beeinträchtigt werden. Daher weist sie gemäß einer Weiterbildung von eigenständiger und erfinderischer Bedeutung eine, bevorzugt lipophile, für das Gas durchlässige, besonders bevorzugt einen Protonencarrier aufweisende, Membran zwischen der Quellen-Elektrode und dem Elektrolytraum auf. Hinsichtlich des Wortes "zwischen" wird auf die obige Bemerkung zur Trennung von Elektrode und Elektrolyt verwiesen. Bezüglich der speziellen Ausgestaltung der Membran wird insbesondere auf die DE-A 27 30 143 und die EP-A 0 141 178 verwiesen.

Bevorzugt sind zwischen den Anschluß der Bezugselektrode und den Anschluß der weiteren Elektrode und den jeweiligen Eingang des Differenzverstärkers Impedanzwandler geschaltet, um die Anordnung hochohmig zu machen. Um eine hohe Meßgenauigkeit zu erhalten, wird die Gesamt-Anordnung aus Bezugselektrode und Meßelektrode nämlich hochohmig betrieben, so daß eine potentiometrische Messung durchgeführt wird. Die Ströme liegen dabei in der Größenordnung von 10⁻¹⁵ A. Dies wird besonders durch weitere Maßnahmen (Membran) möglich, auf die unten näher eingegangen wird.

Die durch geeignete Maßnahmen erreichte Hochohmigkeit der Bezugselektrode paßt diese auch an die Meßelektrode an, so daß der MeßDifferenzverstärker zur Rauschunterdrückung dienen kann.

Bevorzugt ist die Bezugselektrode eine Wasserstoffelektrode und die weitere Elektrode dann eine Sauerstoffelektrode. Diese haben sich bei den hier ins Auge gefaßten Anwendungsgebieten besonders bewährt. Wenn die Bezugselektrode eine (als Anode geschaltete bzw. wirkende) Wasserstoffelektrode ist, können damit das Gas O₂ und zahlreiche Kationen an einer zugehörigen Meßelektrode gemessen werden, z. B. K⁺, Na⁺. Eine solche Gesamtanordnung, z. B. mit einer Sauerstoffelektrode wie sie in der DE-A 27 30 143 beschrieben ist, ist ausdrücklich bevorzugt.

Alternativ bevorzugt ist die Bezugselektrode eine Sauerstoffelektrode. Diese werden als Bezugselektroden bei der Messung bestimmter Stoffe mit Vorteil verwendet. Die weitere Elektrode ist dann eine Wasserstoffelektrode. Die zugehörige Meßelektrode kann dann Gase (z .B. H₂, vgl. die deutsche Parallel-Anmeldung, P 35 37 915.4, vom Prioritätstage dieser Anmeldung eines Erfinders und Anmelders dieser Anmeldung) und H₂O₂ messen (vgl. die eingangs erwähnte EP-A 0 141 178). Die zugehörige Meßelektrode kann ferner weitere Anionen, z.B. Cl⁻ oder HCO₃⁻ messen. Hierzu werden die Membranen mit geeigneten Carriern versetzt.

Jedenfalls sind die Bezugselektroden bzw. weiteren Elektroden Gaselektroden, da die Erzeugung und Abführung der benötigten Gase besonders einfach ist.

Goldelektroden haben sich für die Gas-Bezugselektroden und weiteren Elektroden besonders bewährt, da sich Gold beonders gut z.B. auf Membranen aufsputtern läßt. Alternativ sind Platinelektroden oder andere Edelmetallelektroden bevorzugt.

In einer besonders bevorzugten Ausführungsform ist die Bezugselektrode und/oder die weitere Elektrode aus palladiniertem Platin.

Besonders bevorzugt ist zwischen dem Elektrolyten und der Bezugselektrode und zwischen dem Elektrolyten und der weiteren Elektrode jeweils eine Schutzmembran vorgesehen. "Zwischen" ist oben erläutert. Diese verbessert schon an sich die Stabilität der Bezugselektroden wesentlich, und ermöglichen im Zusammenhang mit dem durch die beschriebenen Maßnahmen erreichten hohen Widerstand und damit geringen Strom eine potentiometrische Messung. Die hohe Stabilität der Elektroden beruht vor allem darauf, daß die Verschmutzung der Elektroden durch an der Reaktion nicht beteiligte Stoffe vermieden werden kann. Solche Membranen sind in der eingangs genannten EP-A 0 141 178 näher beschrieben. Auch im vorliegenden Fall sind lipophile Membranen bevorzugt, die besonders bevorzugt einen Protonencarrier aufweisen.

Bevorzugt weist die Anordnung eine Wasserstoffquelle für die Bezugselektrode auf. Dadurch lassen sich gleichmäßige Bedingungen für die Bezugselektrode herstellen, wie weiter oben erläutert.

Im Falle der Sauerstoff-Bezugselektroden weist die Anordnung bevorzugt dementsprechend eine Sauerstoffquelle auf.

Die weitere Elektrode hat dann jeweils eine Quelle für das andere Gas.

Die Erfindung betrifft auch eine elektrolytische Katheter- oder Kanülenmeßvorrichtung, mit einem hohlzylindrischen, länglichen Gehäuse und mit daran angeordneten Meß- und/oder Bezugselektroden sowie ggfs. weiteren Elektroden. Dabei haben die Meß und Bezugselektroden sowie die ggfs. vorhandenen weiteren Elektroden insbesondere und besonders bevorzugt die oben angegebenen Merkmale einzeln oder in Kombination.

Die Vorteile der erfindungsgemäßen Ausgestaltung lassen sich besonders günstig bei physiologischen Messungen, insbesondere in vivo, nutzen. Dort stehen in der Regel nur äußerst geringe Substanzmengen zur Verfügung, die einerseits eine hohe, mit vorstehenden Maßnahmen erreicht Meßgenauigkeit erfordern, andererseits aber auch eine besondere Anpassung an die Meßumstände erfordern. Die Erfindung schafft daher eine Meßvorrichtung, die sich besonders gut im menschlichen Körper einsetzen läßt.

Dies wird erfindungsgemäß dadurch erreicht, daß die Bezugselektrode und ggfs. die weitere Elektrode im Innern des Meßzylinders angeordnete, im wesentlichen achsparallele Drähte aufweisen.

Dadurch ist es möglich, die Elektroden raumsparend in einem Katheter oder einer Kanüle unterzubringen. Die Drähte lassen sich aber trotzdem mit den Membranen versehen (z.B. durch Ummantelung) und leicht an die vorgesehene Elektronik anschließen.

Ggfs. in Kombination mit den vorstehenden Merkmalen sind die Meßelektroden bei einer solchen Meßvorrichtung im wesentlichen ringförmig um den Außenmantel des Hohlzylinders angeordnet.

Dadurch können Sie, z.B. in Form eines flachen, aufgedampften oder aufgesputterten Gürtels, raumsparend angebracht werden und dennoch auf einfache Weise mit den physiologischen Lösungen, z.B. den Gewebsflüssigkeiten der Gewebe, in die die Kanüle eingestochen ist, in Verbindung treten.

Besonders bevorzugt ist die eine, einführseitige Öffnung des Hohlzylinders durch eine ionenpermeable (bevorzugt Poren-)Membran gegen den Außenraum abgeschlossen. Insbesondere durch die oben geschilderten Maßnahmen ist es möglich, den Elektrolyten der Meßvorrichtung z.B. den Werten des Blutes anzupassen. Es reicht dann eine einfache Porenmembran zur Trennung von Elektrolyt und Meßflüssigkeit aus. Durch die erfindungsgemäß erreichte Hochohmigkeit der Meßanordnung stören Anlagerungen von Proteinen nicht durch Impedanzerhöhung, da sie nur unwesentlich zu der insgesamt hohen Gesamtimpedanz beitragen. Hingegen verhindert die Membran eine Verschmutzung des inneren Meßraumes der Kanüle.

Bevorzugt ist der Innenraum des Hohlzylinders mit einem Elektrolyten gefüllt. Dieser ist zweckmäßig der vorgesehenen Meßlösung angepaßt, sofern nicht ohnehin enzymatisch gearbeitet wird (vgl. z. B. die eingangs genannte EP-A 0 141 178).

Besonders bevorzugt sind die Gas-Erzeugerelektroden wie oben erläutert, drahtförmig ausgebildet. Auf diese Weise lassen sie sich gut in die Meßeinrichtung integrieren. Bevorzugte An- und Zuordnungen der einzelnen Elemente werden noch bei den Ausführungsbeispielen dargestellt.

Besonders bevorzugt sind zwei Meßelektroden vorhanden, von denen die eine anodisch und die andere kathodisch ausgebildet ist. "Anodisch (bzw. kathodisch) ausgebildet" soll heißen, daß die Elektrode durch ihren Aufbau, durch ihre Materialien, und ggfs. die Polarisationsspannung als Anode oder Kathode relativ zu den Bezugselektroden wirkt. Bevorzugt sind dann jeweils geeignete Bezugselektroden ausgebildet.

Nachfolgend wird die Erfindung anhand der beigefügten Zeichnungen, auf die wegen ihrer großen Klarheit und Übersichtlichkeit bezüglich der Offenbarung ausdrücklich verwiesen wird, noch näher erläutert. Es zeigen:
- Fig. 1:: Eine erfindungsgemäße Anordnung von Bezugselektrode und elektrolytischer Gasquelle;
- Fig. 2:: Eine Anordnung mit einer Bezugselektrode und einer "weiteren Elektrode", die erfindungsgemäß geschaltet sind, mit der Gas-Erzeugerquellen-Anordnung;
- Fig. 3:: Ein Ausführungsbeispiel einer erfindungsgemäßen Schaltung für die Bezugselektrode, die Meßelektrode und die weitere Elektrode; und
- Fig. 4:: eine erfindungsgemäße Katheter-Meßeinrichtung.

Eine Wasserstoff-Bezugselektrode aus Gold, 6, die bis auf eine Fläche von einem Isoliermaterial 28 umgeben ist, ist auf dieser Fläche durch eine lipohile Membran 30 mit einem Protonencarrier abgedeckt. Die Elektrode ist durch die Membran 30 von dem Elektrolyten 2 getrennt, der sich in einem angedeuteten Elektrolytraum 3 befindet. In Gegenüberlage zur Membranfläche ist, ebenfalls im Elektrolytraum, eine Wasserstoffquelle 32 angeordnet. Diese ist, um eine gleichmäßige Wasserstoffabgabe zu gewährleisten, durch eine lipophile Membran 34, bspw. aus PVC, vom Elektrolyten getrennt. Die Gegenelektrode 36 der Erzeugerelektrode, bspw. eine Sauerstofferzeugerelektrode, ist über eine entsprechend gepolte Gleichspannungsquelle mit der Wasserstoff-Erzeugerelektrode 32 verbunden. Eine Konstantstromquelle 40 sorgt dabei durch I = const. im Erzeugerkreis für eine gleichmäßige Erzeugungsrate, hier bspw. mit einem Partialdruck von 1 mm Hg. Dadurch bleibt die schädigende Wirkung des H₂ an den Elektroden niedrig.

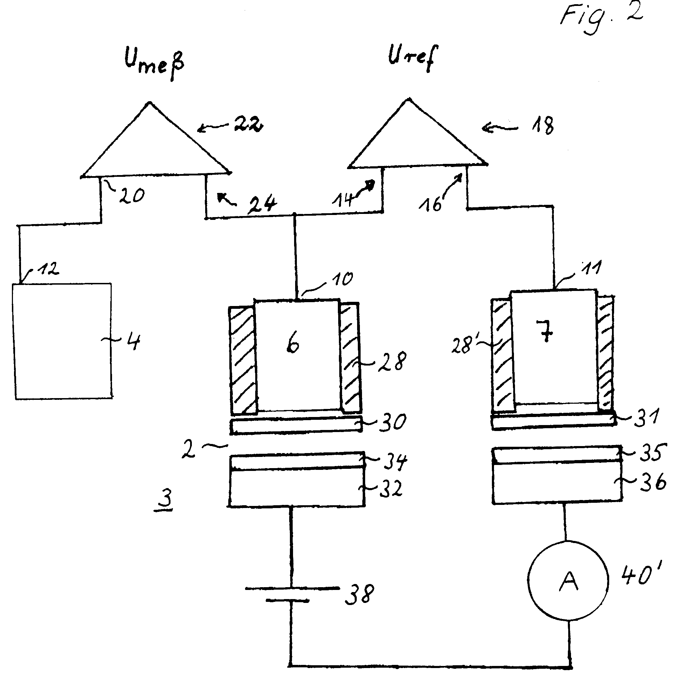

In Fig. 2 wird die erfindungsgemäße Anordnung von Bezugselektrode und weiterer Elektrode im Zusammenwirken mit einer zugehörigen Meßelektrode näher erläutert. In einem Elektrolyten 2 in einem Elektrolytraum 3 befinden sich die Meßelektrode 4, hier eine Kathode, und die Bezugs- oder Referenzelektrode 6, hier eine Anode, und die "weitere Elektrode" 7, hier wieder eine Kathode. Sie sind, bis auf die Membranfläche (und den Anschluß) durch ein Isolationsmaterial 28, 28′ isoliert.

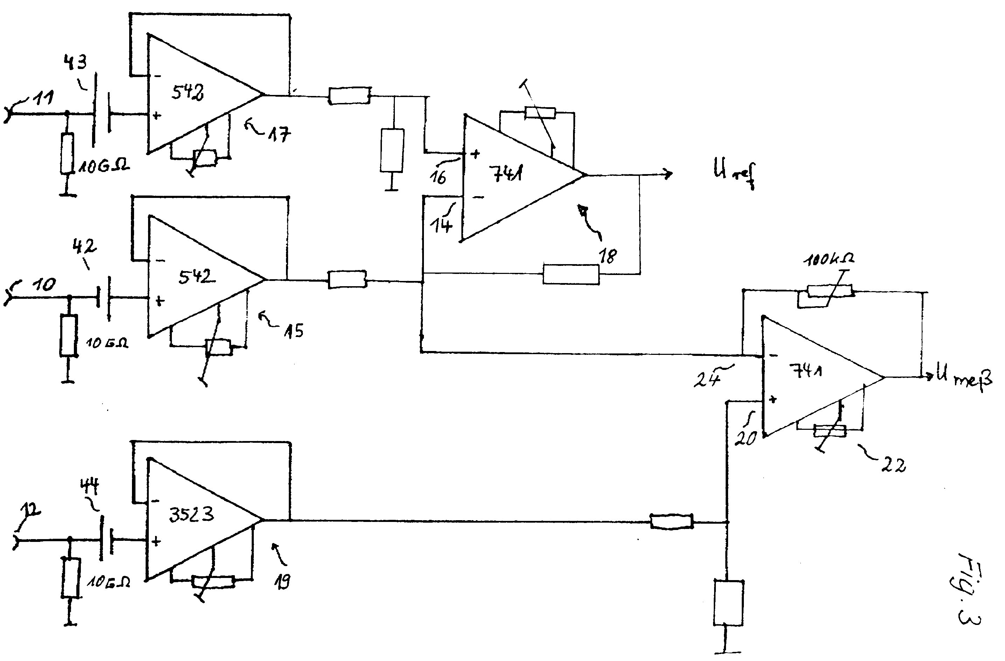

Die für die Gas-Elektroden erforderlichen Polarisationsspannungsquellen sind in Fig. 2 nicht eingezeichnet. Es wird auf Fig. 3 verwiesen.

Die Anschlüsse 10 bzw. 11 der Bezugselektrode 6 bzw. der weiteren Elektrode 7 sind jeweils an einen Eingang 14 bzw. 16 eines Differenzverstärkers 18 angeschlossen, während der Anschluß 12 der Meßelektrode 4 mit dem einen Eingang 20 eines Meß-Differenzverstärkers 22 verbunden ist. An den anderen Eingang 24 des Verstärkers 22 ist der Ausgang 10 der Bezugselektrode 6 ebenfalls angelegt.

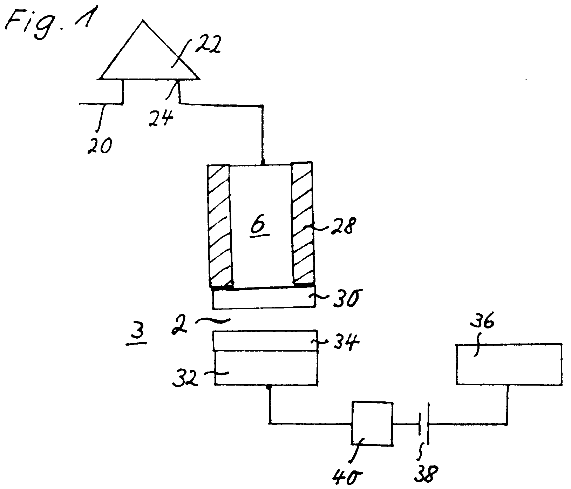

Ferner ist in Fig. 2 die Bezugselektrode 6 und die weitere Elektrode 7 im Verhältnis zu den jeweils gegenüberliegenden, hier in der Anordnung der Elektroden symmetrischen, (Wasserstoff- bzw. Sauerstoff-)Gasquellen gezeigt. Die beiden Elektroden 6 und 7 sind jeweils an den Seiten und gegeneinander abgeschirmt, hier durch PVC 28, 28′. Die an sich zum Elektrolyten 2 offenen Flächen der Bezugselektroden sind jeweils durch eine lipophile Schutzmembran 30 bzw. 31, vorzugsweise aus PVC, vom Elektrolyten getrennt. Die Schutzmembranen 30 und 31 sind durch einen Protonencarrier protonenpermeabel gemacht worden. Die Gasquellen sind bei Fig. 1 näher erläutert worden. Die Schutzmembranen 34 bzw. 35 sind für das zu erzeugende Gas und die Ionen, aus denen das Gas erzeugt wird, durchlässig, ggfs. weisen sie geeignete Carrier auf. In Fig. 2 ist ein Strom-Meßinstrument 40′ gezeigt, das den Stromfluß und damit die Gaserzeugung zu überwachen gestattet.

Fig. 3 zeigt die Schaltung nach den Elektroden mehr im Einzelnen. Die Nummern der Bauelemente sind die der Fa. Analog Devices. Die unbezeichneten Widerstände betragen 10kΩ. Die Spannungsversorgung ist ± 8 V, je über 2,2 µF geblockt. Die Bezugszeichen sind weitestmöglich die gleichen wie in Fig. 1 und 2, oder dazu analog.

Der Anschluß 10 der (nicht gezeigten) Bezugselektrode 6 ist über eine Polarisationsspannungsquelle 42 (von bspw. 150 mV) an den positiven Eingang eines Impedanzwandlers 15 angeschlossen.

Der Ausgang des Impedanzwandlers ist an den negativen Eingang rückgekoppelt. Der Ausgang des Impedanzwandlers ist über eine Widerstand an den negativen Eingang 14 eines Differenzverstärkers 18 angeschlossen, an den über einen Widerstand auch der Ausgang von 18 anliegt. Zwischen den Ausgang 10 der einen Bezugselektrode 6 und die Polarisationsspannungsquelle 42 ist noch ein mit Masse verbundener Widerstand von 10GΩ angeschlossen, der der Impedanzabsenkung gegenüber dem Wert, der durch den Impedanzwandler allein erhalten würde, dient.

Die Verbindung zwischen dem Anschluß 11 der weiteren Elektrode 7 und dem positiven Eingang 16 des Differenzverstärkers 18 ist völlig gleich aufgebaut. Jedoch ist zwischen Masse und die Verbindung zwischen dem Widerstand, der sich nach dem Ausgang des Impedanzwandlers befindet, und dem positiven Eingang 16 des Differenzverstärkers 18 ein weiterer Widerstand geschaltet.

Der Ausgang des Differenzverstärkers 18 liefert ein Signal, das Aufschluß über eine ev. Instabilität oder Drift der Bezugselektrode gibt.

Der Ausgang eines Meß-Differenzverstärkers 22 (so genannt weil er die Differenz der Spannungen von Meßelektrode 4 und Bezugelektrode 6 mißt) ist über einen veränderlichen Widerstand (100 kΩ) an den negativen Eingang 24 dieses Meß-Differenzverstärkers 22 rückgekoppelt. Der Ausgang des Meß-Differenzverstärkers liefert die Ausgangsspannung U_{meß}, die die Änderung des Potentials an der Meßelektrode angibt.

Der Ausgang des Impedanzwandlers 15 ist über einen Widerstand sowohl mit dem negativen Eingang 14 des Differenzverstärkers 18 als auch mit dem negativen Eingang 24 des Meß-Differenzverstärkers 22 verbunden.

Der Ausgang 12 der Meßelektrode ist über einen Widerstand von 10 GΩ mit Masse verbunden und liegt über eine Polarisationsspannungsquelle 44 von ca. 300 mV am positiven Eingang eines Operationsverstärkers 19, dessen Ausgang mit seinem (19) negativen Eingang verbunden ist. Der Ausgang von 19 ist über einen Widerstand mit dem positiven Eingang 20 des Meß-Differenzverstärkers 22 verbunden, wobei diese Verbindung zwischen Widerstand und Eingang 20 über einen Widerstand an Masse angeschlossen ist.

Bei der potentiometrischen Messung, die einerseits durch die den Schutzmembranen zu verdankende hohe Stabilität möglich ist, und die durch die hohen Impedanzen erreicht wird, fließen nur äußerst geringe Ströme in der Größenordnung von 10⁻¹⁵A.

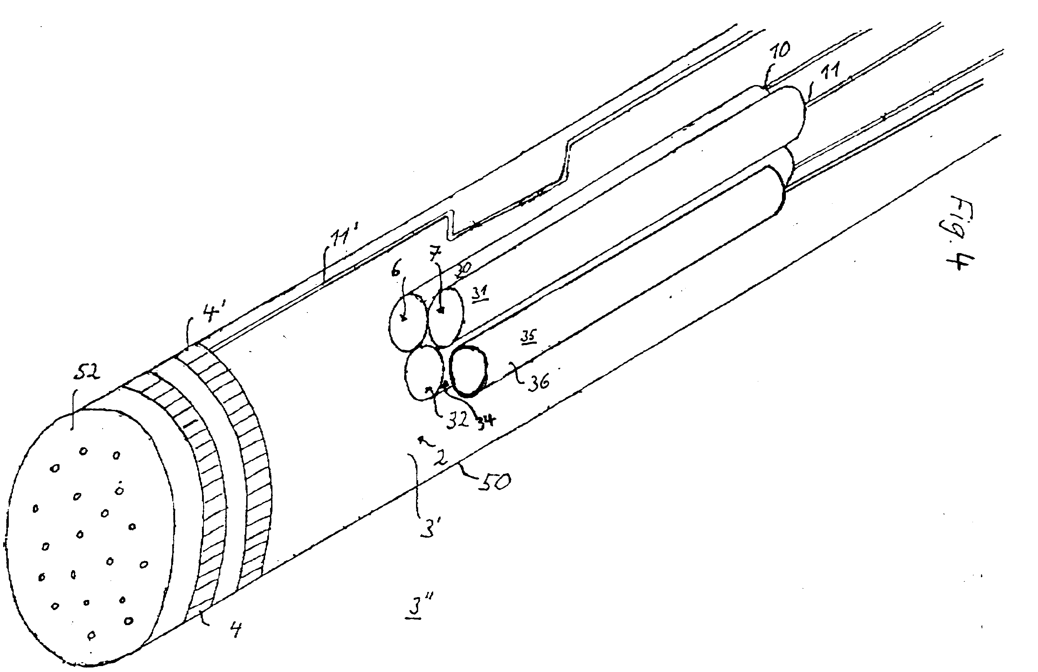

In Fig. 4 ist bei 50 ein Hohlzylinder gezeigt. Mit jeweils geeigneten Abmessungen kann diese Anordnung als Katheter, Kanüle oder Stichelektrode verwendet werden. Dessen vordere Öffnung ist durch eine ionenpermeable Porenmembran 52 herkömmlicher Ausbildung abgeschlossen. Im vorderen Bereich, nahe der ionenpermeablen Porenmembran 52, befinden sich in dieser Reihenfolge vom Ende weg eine pO₂-Meßelektrode 4, die dementsprechend als Kathode ausgebildet und angeschlossen ist und dahinter eine pH₂- oder H₂O₂-Meßelektrode 4′. Im Inneren 3′ des Hohlzylinders 50 befindet sich ein Innenelektrolyt 2, der über die Porenmembran 52 die elektrolytische Verbindung z. B. mit der Gewebsflüssigkeit und damit letztlich zu den Außenelektroden 4, und ggfs. 4′ herstellt. Der Innenelektrolyt 2 kann, wie gesagt, bei der erfindungsgemäßen Ausbildung der Elektroden insbesondere durch Verwendung von Gaselektroden und insbesondere durch die Verwendung von Membranen, den Blutwerten entsprechende Molstärken haben. Es tritt dann kein Diffusionspotential auf. Ein Niederschlag aus dem Blut, der die Porenmembran verstopfen könnte, kann weitgehend vermieden werden.

Im Inneren des Hohlzylinders sind ferner im wesentlichen achsparallel vier Edelmetalldrähte angeordnet, die über einen gewissen Bereich mit einer lipophilen Carriermembran umgeben sind. Der Draht 32 mit der Membran 34 dient dabei der elektrolytischen Wasserstofferzeugung, der Draht 36 mit der Membran 35 dient dann der elektrolytischen Sauerstofferzeugung. Die Drähte 6 und 7 sind eine Gas-Bezugselektrode bzw. eine weitere Elektrode, die hier als Wasserstoffanode bzw. Sauerstoffkathode ausgebildet sind. Sie sind mit Membranen 30 bzw. 31 umgeben. Die Drähte sind durch isolierte Kabel nach außen geführt, was bei 6 und 7 durch die Bezeichnung der Anschlüsse 10 und 11 angedeutet ist.

Die Ringelektroden sind ebenfalls jeweils durch isolierte Kabel angeschlossen, was für die Elektrode 4′ durch das Kabel bzw. den Anschluß 11′ angedeutet ist.

Die beschriebene und gezeigte Anordnung der Elektroden zueinander ist besonders bevorzugt, da sich hierdurch einerseits die gewünschten Beeinflussungen ergeben, unerwünschte Beeinflussungen aber vermieden werden können.

Im Rahmen der Erfindung liegt es, durch geeignetes An- und Abschalten der jeweiligen Elektroden entweder eine anodische Messung (Elektrode 4') oder eine kathodische Messung (Elektrode 4) oder beide gemeinsam durchzuführen.

Im übrigen sind die Elektroden elektrisch angeschlossen wie in Fig. 2 und 3 näher erläutert.

## Patentansprüche

1. Anordnung zur Stabilisierung einer Gas-Bezugselektrode bei der elektrochemischen Messung von Aktivitäten, mit
einer Bezugselektrode aus Edelmetall (6), und
einer die Bezugselektrode (6) teilweise bedeckenden lipophilen Membran (30, 31), die zwischen der Bezugselektrode (6) und einem, in einem Elektrolytraum (3, 3′) enthaltenen, Elektrolyten (2) angeordnet ist,
**gekennzeichnet durch**
eine Gas-Quellenelektrode (32) für das Gas für die Gas-Bezugselektrode (6), mit einer lipophilen, für das Gas durchlässigen, insbesondere einen Protonencarrier aufweisenden, Membran (34) zwischen der Quellen-Elektrode (32) und dem Elektrolytraum (3).

2. Anordnung nach Anspruch 1, dadurch gekennzeichnet,
daß die Quellen-Elektrode (32 36) ein Edelmetall umfaßt.

3. Anordnung nach Anspruch 1 oder 2, gekennzeichnet durch
eine Gegenelektrode (36) für die Quellen-Elektrode (32), im Elektrolytraum (3) der Bezugselektrode (6).

4. Anordnung nach Anspruch 3, dadurch gekennzeichnet,
daß auch die Gegenelektrode (36) für die Quellen-Elektrode (32) eine lipophile, für das Gas durchlässige, bevorzugt einen Protonencarrier aufweisende, Membran (35) zwischen sich (36) und dem Elektrolytraum (3) aufweist.

5. Anordnung nach Anspruch 3 oder 4, gekennzeichnet durch
eine Konstantstromquelle (40) zwischen Quellen-Elektrode (32) und Gegenelektrode (36), zum Betreiben der Gasquelle.

6. Anordnung nach einem der Ansprüche 3 bis 5, gekennzeichnet durch
eine weitere Elektrode (7) von der Polarität der Meßelektrode - d. h. einer Polarität entgegengesetzt der der Bezugselektrode (6) - der (7) die Gegenelektrode (36) als Quellen-Elektrode (36) zugeordnet ist, wobei der Anschluß (10) der Bezugselektrode (6) an dem einen (14) Eingang eines Differenzverstärkers (18) und der Anschluß (11) der weiteren Elektrode (7) an dem anderen Eingang (16) dieses Differenzverstärkers (18) angelegt ist, dessen (18) Ausgang (U_{ref}) überwacht wird.

7. Anordnung nach einem der Ansprüche 3 bis 6, gekennzeichnet durch
eine Strommeßeinrichtung (40′) zwischen Quellen-Elektrode (32) und Gegenelektrode (36).

8. Anordnung nach einem der Ansprüche 6 oder 7, dadurch gekennzeichnet,
daß zwischen den Anschluß (10) der Bezugselektrode (6) und den Anschluß (11) der weiteren Elektrode (7) und den jeweiligen Eingang (14 bzw. 16) des Differenzverstärkers (18) Impedanzwandler (15, 17) geschaltet sind, um die Anordnung hochohmig zu machen.

9. Anordnung nach einem der Ansprüche 6 bis 8, dadurch gekennzeichnet,
daß die Bezugselektrode (6) eine Wasserstoff-Elektrode und die weitere Elektrode (7) eine Sauerstoff-Elektrode ist.

10. Anordnung nach einem der Ansprüche 6 bis 8, dadurch gekennzeichnet,
daß die Bezugselektrode (6) eine Sauerstoff-Elektrode und die weitere Elektrode (7) eine Wasserstoff-Elektrode ist.

11. Anordnung nach einem der Ansprüche 6 bis 10, dadurch gekennzeichnet,
daß die Bezugselektrode (6) und/oder die weitere Elektrode (7) Edelmetallelektroden, bevorzugt Gold- oder Platinelektroden, sind.

12. Anordnung nach Anspruch 11, dadurch gekennzeichnet,
daß die Bezugselektrode (6) und/oder die weitere Elektrode (7) palladinierte Platinelektroden sind.

13. Anordnung nach einem der Ansprüche 6 bis 12, dadurch gekennzeichnet,
daß zwischen dem Elektrolyten (2) und der Bezugselektrode (6) und zwischen dem Elektrolyten (2) und der weiteren Elektrode (7) jeweils eine lipophile Schutzmembran (30, 31) angeordnet ist.

14. Anordnung nach einem der Ansprüche 1 bis 13, dadurch gekennzeichnet,
daß die lipophile Schutzmembran (30, 31) einen Protonencarrier aufweist.

15. Anordnung nach Anspruch 9, dadurch gekennzeichnet,
daß die Gasquelle für die Bezugselektrode (6) eine Wasserstoffquelle (32) ist.

16. Anordnung nach Anspruch 10, dadurch gekennzeichnet,
daß die Gasquelle für die Bezugselektrode (6) eine Sauerstoffquelle ist.

17. Elektrolytische Katheder oder Kanülen-Meßvorrichtung, mit einem hohlzylindrischen, länglichen Gehäuse (50), einer an dem Gehäuse (50) angeordneten Meßelektrode (4,4′) und einer Gas-Bezugselektrode (6), gekennzeichnet durch eine Anordnung zur Stabilisierung der Gas-Bezugselektrode (6) nach einem oder mehreren der vorstehenden Ansprüche.

18. Meßvorrichtung nach Anspruch 17, dadurch gekennzeichnet, daß die Bezugselektrode (6) einen im Inneren (3′) des hohlzylindrischen Gehäuses (50) angeordneten, im wesentlichen achsparallelen Draht umfaßt.

19. Meßvorrichtung nach Anspruch 17 oder 18, dadurch gekennzeichnet, daß die weitere Elektrode (7) einen im Inneren (3′) des hohlzylindrischen Gehäuses (50) angeordneten, im wesentlichen achsparallelen Draht umfaßt.

20. Meßvorrichtung nach einem der Ansprüche 17 - 19, dadurch gekennzeichnet, daß die Meßelektrode (4,4′) im wesentlichen ringförmig um den Außenmantel des hohlzylindrischen Gehäuses (50) herum angeordnet ist.

21. Meßvorrichtung nach einem oder mehreren der Ansprüche 17 - 20, dadurch gekennzeichnet, daß eine einführseitige Öffnung des hohlzylindrischen Gehäuses (50) durch eine ionenpermeable Membran (52) gegen einen Außenraum (3˝) abgeschlossen ist.

22. Meßvorrichtung nach einem oder mehreren der Ansprüche 17 - 21, dadurch gekennzeichnet, daß der Innenraum (3′) des hohlzylindrischen Gehäuses (50) mit einem Elektrolyten (2) gefüllt ist.

23. Meßvorrichtung nach einem oder mehreren der Ansprüche 17 - 22, dadurch gekennzeichnet, daß die Gas-Quellenelektrode (32) und/oder die Gegenelektrode (36) drahtförmig ausgebildet sind.

24. Meßvorrichtung nach einem oder mehreren der Ansprüche 17 - 23, dadurch gekennzeichnet, daß zwei Meßelektroden (4,4′) vorgesehen sind, von denen die eine anodisch und die andere kathodisch ausgebildet ist.

## Claims

1. An arrangement for stabilizing a gas reference electrode during the electrochemical measurement of activities, comprising
a reference electrode (6) of precious metal, and
a lipophilic membrane (30, 31) that partially covers the reference electrode (6),
said lipophilic membrane (30, 31) being arranged between the reference electrode (6) and an electrolyte (2) contained in an electrolyte space (3, 3′),
characterized by
a gas source electrode (32) for the gas for the gas reference electrode (6) having a lipophilic membrane (34) permeable for the gas and, in particular, comprising a proton carrier between the source electrode (32) and the electrolyte area (3).

2. An arrangement according to claim 1, characterized in that the source electrode (32, 36) comprises a precious metal.

3. An arrangement according to claim 1 or claim 2, characterized by a counter electrode (36) for the source electrode (32) in the electrolyte area (3) of the reference electrode (6).

4. An arrangement according to claim 3, characterized in that the counter electrode (36) for the source electrode (32) also comprises a lipophilic membrane (35) between itself (36) and the electrolyte area (3), said lipophilic membrane (35) being permeable for the gas and preferably comprises a proton carrier.

5. An arrangement according to claim 3 or claim 4, characterized by a stabilized current regulator (40) between the source electrode (32) and the counter electrode (36) for operating the gas source.

6. An arrangement according to one of the claims 3 to 5, characterized by a further electrode (7) of the polarity of the measuring electrode
- i.e. a polarity contrary to that of the reference electrode (6) - the counter electrode (36) being assigned to said further electrode (7) as source electrode (36), the connector (10) of the reference electrode (6) being connected to the one (14) input of a differential amplifier (18) and the connector (11) of said further electrode (7) being connected to the other input (16) of this differential amplifier (18), the output (U_{ref}) of which (18) is being monitored.

7. An arrangement according to one of the claims 3 to 6, characterized by a means for measuring a current (40′) between source electrode (32) and counter electrode (36).

8. An arrangement according to one of the claims 6 or 7, characterized in that impedance conveners (15, 17) are interconnected between the connector (10) of said reference electrode (6) and the connector (11) of said further electrode (7) and the respective input (14 resp. 16) of said differential amplifier (18), so that the arrangement is rendered to be of high-resistance.

9. An arrangement according to one of the claims 6 to 8, characterized in that said reference electrode (6) is a hydrogen electrode and said further electrode (7) is an oxygen electrode.

10. An arrangement according to one of the claims 6 to 8, characterized in that said reference electrode (6) is an oxygen electrode and said further electrode (7) is a hydrogen electrode.

11. An arrangement according to any of the claims 6 to 10, characterized in that said reference electrode (6) and/or said further electrode (7) are electrodes of precious metal, preferably gold or platinum electrodes.

12. An arrangement according to claim 11, characterized in that said reference electrode (6) and/or said further electrode (7) are palladinized platinum electrodes.

13. An arrangement according to one of the claims 6 to 12, characterized in that a lipophilic protective membrane (30, 31) is arranged between the electrolyte (2) and said reference electrode (6) and between said electrolyte (2) and said further electrode (7), respectively.

14. An arrangement according to one of the claims 1 to 13, characterized in that said lipophilic protective membrane (30, 31) comprises a proton carrier.

15. An Arrangement according to claim 9, characterized in that the gas source for said reference electrode (6) is a hydrogen source.

16. An arrangement according to claim 10, characterized in that the gas source for said reference electrode (6) is an oxygen source.

17. An electrolytic catheter- or cannula-measuring device having a hollow cylindrical, elongated housing (50), a measuring electrode (4,4′) arranged at said housing (50), and a gas reference electrode (6), characterized by an arrangement for stabilizing said gas referencc electrode according to one or more of the preceeding claims.

18. A measuring device according to claim 17, characterized in that said reference electrode (6) comprises a wire arranged in the inner (3′) of said hollow cylindrical housing (50), said wire being substantially parallel to the axis of said housing.

19. A measuring device according to claim 17 or 18, characterized in that the further electrode (7) comprises a wire arranged in the inner (3′) of said hollow cylindrical housing (50), said wire being substantially parallel to the axis of said housing.

20. A measuring device according to one of the claims 17 to 19, characterized in that said measuring electrode (4, 4′) is arranged in a substantially annular way around the outer casing of said hollow cylindical housing (50).

21. A measuring device according to one ore more of claims 17 to 20, characterized in that an opening on the inserting side of the hollow cylindrical housing (50) is sealed against an outer space (3˝) by an ion-permeable membrane (52).

22. A measuring device according to one ore more of claims 17 to 21, characterized in that the inner space (3′) of said hollow cylindrical housing (50) is filled with an electrolyte (2).

23. A measuring device according to one ore more of claims 17 to 22, characterized in that the gas source electrode (32) and/or the counter electrode (36) are formed in the way of a wire.

24. A measuring device according to one ore more of claims 17 to 23, characterized in that two measuring electrode (4, 4′) are provided, the one of which is provided to be anodical and the other is provided to be cathodical.

## Revendications

1. Système de stabilisation d'une électrode de référence à gaz par la mesure électrochimique de son activité, comprenant une électrode de référence en métal précieux (6), et une membrane lipophile (30, 31) recouvrant partiellement l'électrode de référence (6), située entre cette dernière et un électrolyte (2) contenu dans un volume (3, 3′) prévu à cet effet, caractérisé en ce qu'il comporte une électrode source à gaz (32) pour le gaz de l'électrode de référence à gaz (6), avec une membrane (34) lipophile perméable au gaz, notamment susceptible de véhiculer des protons, placée entre l'électrode source (32) et le volume d'électrolyte (3).

2. Système selon la revendication 1, caractérisé en ce que l'électrode source (32, 36) contient un métal précieux.

3. Système selon la revendication 1 ou 2, caractérisé en ce qu'il comporte une contre-électrode (36) pour l'électrode source (32), située dans le volume d'électrolyte (3) de l'électrode de référence (6).

4. Système selon la revendication 3, caractérisé en ce que ladite contre-électrode (36) comprend également une membrane lipophile (35) perméable au gaz et de préférence susceptible de véhiculer des protons, située entre elle (36) et le volume d'électrolyte (3).

5. Système selon la revendication 3 ou 4, caractérisé en ce qu'il comporte une source de courant (40) entre l'électrode (32) et la contre-électrode (36), pour activer la source de gaz.

6. Système selon l'une des revendications 3 à 5, caractérisé par l'existence d'une électrode (7) supplémentaire polarisée comme une électrode de mesure - c'est-à-dire d'une polarisation inverse de celle de l'électrode de référence (5) - qui est adjointe à l'électrode de référence (6) comme électrode source (36), de sorte que la connexion (10) de l'électrode de référence (6) s'applique à une entrée (14) d'un amplificateur différentiel (18) et la connexion (11) de l'autre électrode (7) s'applique à l'autre entrée (16) dudit amplificateur différentiel (18) dont la sortie (U ref) est monitosée.

7. Système selon l'une des revendications 3 à 6, caractérisé en ce qu'un dispositif de mesure de courant (40′) est placé entre l'électrode source (32) et la contre-électrode (36).

8. Système selon l'une des revendications 6 et 7, caractérisé en ce que des transformateurs d'impédance (15, 17) sont placés entre respectivement la connexion (10) de l'électrode de référence (6) et la connexion (11) de l'autre électrode (7), et les entrées correspondantes (14, 16) de l'amplificateur différentiel (18), de manière à augmenter son impédance.

9. Système selon l'une des revendications 6 à 8, caractérisé en ce que l'électrode de référence (6) est une électrode à l'hydrogène, et l'autre électrode (7) est une électrode à oxygène.

10. Système selon l'une des revendications 6 à 8, caractérisé en ce que l'électrode de référence (6) est à oxygène, et l'autre électrode (7) est à hydrogène.

11. Système selon l'une des revendications 6 à 10, caractérisé en ce que l'électrode de référence (6) et / ou l'autre électrode est / sont en métal précieux, de préférence en or ou en platine.

12. Système selon la revendication 11, caractérisé en ce que l'électrode de référence (6) et / ou l'autre électrode (7) sont des électrodes en platine palladinisé.

13. Système selon l'une des revendications 6 à 12, caractérisé en ce qu'une membrane de protection lipophile (30, 31) est placée à la fois entre l'électrolyte (2) et l'électrode de référence (6) d'une part, et entre l'électrolyte (2) et l'autre électrode (7) d'autre part.

14. Système selon l'une des revendications 1 à 13, caractérisé en ce que la membrane protectrice lipophile (30, 31) est capable de véhiculer les protons.

15. Système selon la revendication 9, caractérisé en ce que la source de gaz pour l'électrode de référence (6) est une source à hydrogène (32).

16. Système selon la revendication 10, caractérisé en ce que la source de gaz pour l'électrode de référence (6) est une source à oxygène.

17. Dispositif de mesure électrolyptique pour cathéter ou canule, avec une enveloppe cylindrique allongée (50), une électrode de mesure (4, 4′) rapportée à ladite enveloppe (50) et une électrode de référence à gaz (6), caractérisé en ce qu'il comporte un système de stabilisation d'une électrode de référence à gaz (6) selon une ou plusieurs des revendications précédentes.

18. Système selon la revendication 17, caractérisé en ce que l'électrode de référence (6) comporte une tige filiforme sensiblement parallèle à l'axe et située dans le volume intérieur (3′) de l'enveloppe cylindrique creuse (50).

19. Système selon l'une des revendications 17 ou 18, caractérisé en ce que l'autre électrode (7) comporte une tige filiforme sensiblement parallèle à l'axe et située dans le volume intérieur (3′) de l'enveloppe cylindrique creuse (50).

20. Système selon l'une des revendications 17 à 19, caractérisé en ce que l'électrode de mesure (4, 4′) est de forme sensiblement annulaire et placée autour de l'extérieur de l'enveloppe cylindrique creuse (50).

21. Système selon l'une des revendications 17 à 20, caractérisé en ce qu'une ouverture d'entrée de l'enveloppe cylindrique creuse (50) est obturée par une membrane (52) perméable aux ions, la séparant de l'espace extérieur (3˝).

22. Système selon l'une des revendications 17 à 21, caractérisé en ce que le volume interne (3′) de ladite enveloppe (50) est rempli d'électrolyte (2).

23. Système selon l'une des revendications 17 à 23, caractérisé en ce que l'électrode source à gaz (32) et / ou la contre-électrode (36) est filiforme.

24. Système selon l'une des revendications 17 à 23, caractérisé en ce que deux électrodes de mesure (4, 4′) sont prévus, l'une étant anodique et l'autre étant cathodique.
